# EUROPEAN PATENT APPLICATION

(11) **EP 4 253 316 A1**
(43) Date of publication of application: **04.10.2023**
(21) Application number: 22908854.7
(22) Date of filing: 27.12.2022
(51) Int. Cl.: C01B 25/00, C01B 25/10, C01D 15/00

(54) **HEXAFLUOROPHOSPHATE, PHOSPHORUS PENTAFLUORIDE, PREPARATION METHOD THEREFOR AND APPLICATION THEREOF**

(30) Priority: 06.01.2022 CN 202210007727
(71) Applicant: Shenzhen Yanyi New Materials Co., Ltd., Shenzhen, Guangdong 518110 (CN)
(72) Inventor: YUE, Min, Shenzhen, Guangdong 518110 (CN); ZHANG, Chunhui, Shenzhen, Guangdong 518110 (CN)
(74) Representative: De Bonis, Paolo
(86) International application number: PCT/CN2022/142458
(87) International publication number: WO 2023/131011

(57) **Abstract**

Disclosed are a hexafluorophosphate salt, phosphorus pentafluoride, a preparation method thereof and use thereof. The preparation method of a hexafluorophosphate salt comprises the following steps: mixing a phosphoric acid solution of phosphorus pentoxide, sulfur trioxide and fluoride under an inert gas atmosphere, and performing reaction and then evaporation and concentration, dissolution, filtration, and drying in sequence to obtain the hexafluorophosphate salt. The method of preparing the phosphorus pentafluoride by using the hexafluorophosphate salt obtained by the preparation method provided by the present application comprises the following steps: mixing the hexafluorophosphate salt and a catalyst solution, and performing catalytic reaction and then condensation, pressurizing liquefaction and adsorption impurity removal in sequence to obtain the phosphorus pentafluoride. Phosphorus pentafluoride is not used as the raw material for the hexafluorophosphate salt preparation in the present application, which thus avoids using hydrogen fluoride as the raw material for phosphorus pentafluoride production, so that the safety risk of production is reduced; meanwhile, phosphorus pentoxide and sulfur trioxide which have wide sources are used as the raw material, thereby reducing the raw material cost and facilitating the industrial large-scale production.

## Description

### TECHNICAL FIELD

The present application relates to the technical field of electrolyte additives for lithium-ion batteries, for example, a hexafluorophosphate salt, phosphorus pentafluoride, a preparation method thereof and use thereof.

### BACKGROUND

As a new mobile portable power supply, lithium-ion batteries have higher specific capacity and discharge voltage than traditional lead-acid batteries and alkaline batteries and less environmental pollution. At present, lithium-ion batteries are widely used as portable mobile power supply and mobile phone batteries, and widely used as power batteries for electric bikes, cars, etc. Due to the strong policy support, the lithium-ion battery industry has achieved great development with the accumulation of lithium-ion battery technology in recent years, which will be going to develop unceasingly because of the policy encouragement and technological improvements.

Hexafluorophosphate salts and phosphorus pentafluoride are important raw materials in the field of lithium-ion batteries, and the demand for their outputs and quality is increasing. At present, the preparation method of hexafluorophosphate salts mainly includes gas-solid reaction method, hydrogen fluoride solvent method, organic solvent method and ion exchange method. Generally, the preparation method of hexafluorophosphate salts requires phosphorus pentafluoride as a raw material, but phosphorus pentafluoride is toxic and prone to decomposition reaction with moisture in the environment to generate toxic and corrosive hydrogen fluoride.

CN 113353958A discloses a clean production process of a hexafluorophosphate salt, which comprises the following steps: (1) reacting phosphorus pentachloride with anhydrous hydrofluoric acid or hydrogen fluoride gas to prepare phosphorus pentafluoride, adsorbing a gas mixture obtained after the reaction via lithium fluoride, and performing desorption to obtain a purified phosphorus pentafluoride gas; the unabsorbed hydrogen chloride and hydrogen fluoride gas are subjected to adsorption separation by changing temperature and pressure to obtain a hydrogen chloride gas and a hydrogen fluoride gas separately; (2) preparation of a hexafluorophosphate salt: reacting the obtained purified phosphorus pentafluoride with a lithium source or a sodium source to prepare the hexafluorophosphate salt; and (3) introducing the hydrogen fluoride separated in step (1) as a raw material into the preparation step of phosphorus pentafluoride for recycling.

CN 105776168A discloses a method for preparing a hexafluorophosphate salt, which comprises the following steps: (1) slowly adding phosphorus trichloride and anhydrous hydrogen fluoride into a gas-liquid mixer according to a ratio, wherein the anhydrous hydrogen fluoride is excessive relative to the phosphorus trichloride, and performing reaction at 50-60°C to generate phosphorus trifluoride and hydrogen chloride: (2) continuously introducing phosphorus trifluoride and hydrogen chloride generated in step (1) and redundant hydrogen fluoride gas into a phosphorus pentafluoride reaction generator, continuously introducing chlorine gas at the same time, keeping the reaction system in a dry environment of 35-70°C, and continuously reacting phosphorus trifluoride, chlorine gas and hydrogen fluoride gas in the reactor to generate phosphorus pentafluoride gas; and (3) introducing phosphorus pentafluoride gas into a fluoride salt at -10°C and -30°C, performing reaction to produce a hexafluorophosphate salt, performing crystallization for 2 to 4 hours at -20°C and -30°C, and concentrating and drying the salt to obtain the hexafluorophosphate salt product. The above two method both use phosphorus pentafluoride as a raw material and generate toxic and corrosive hydrogen fluoride which puts forward higher requirements for equipment and process.

Phosphorus pentafluoride (PFs) is a colorless, pungent, malodorous gas at ambient temperature and pressure; its melting point is -93.8°C and boiling point is -84.6°C. PFs will immediately hydrolyze when contacting water and alkali, generates fumes violently in humid air, does not corrode glass in dry state, and can form complex with amine, ethyl ether, nitrate, sulfoxide, etc, and in addition, it is also expensive and not easy to obtain. In the related art, phosphorus pentafluoride is usually synthesized by using phosphorus pentachloride and anhydrous hydrogen fluoride as raw materials to react, but such reaction has a severe exotherm and low yield, and by-product PF₃Cl₂ is easily produced and there are lots of impurities.

CN 104261369A discloses a preparation method of high-purity phosphorus pentafluoride, which comprises the following steps: I. preparing a hexafluorophosphoric acid aqueous solution with polyphosphoric acid and anhydrous hydrogen fluoride as initial raw materials; II. reacting the hexafluorophosphoric acid aqueous solution prepared in step I with sulfur trioxide to obtain a mixture of hexafluorophosphoric acid and sulfuric acid; III. directly heating the mixture of the hexafluorophosphoric acid and the sulfuric acid obtained in step II without separation, and condensing the generated phosphorus pentafluoride vapor to obtain a phosphorus pentafluoride crude product; and IV purifying the crude phosphorus pentafluoride to obtain high-purity phosphorus pentafluoride with a purity of more than 99.5%. Since the hydrogen fluoride gas is used as a raw material, the raw material is relatively expensive, and the hydrogen fluoride gas has strong corrosivity and can damage the reaction kettle and pipelines, which puts forward higher requirements for the anti-corrosion and high-pressure sealing properties of equipment, and the process is relatively complicated.

CN 101353161A discloses a method for preparing phosphorus pentafluoride gas and a method for preparing lithium hexafluorophosphate using the same, wherein phosphorus pentafluoride is prepared by reacting phosphorus pentachloride with anhydrous hydrogen fluoride in the presence of a solvent such as ether, acetonitrile, carbonate or ethyl acetate; in addition, lithium hexafluorophosphate is prepared by subjecting solid lithium fluoride to contact and reaction with phosphorus pentafluoride gas. Since such method uses hydrogen fluoride gas as a raw material, the raw material is relatively expensive and highly corrosive, such reaction has a severe exotherm and low yield, and by-product PF₃Cl₂ is easily produced and there are lots of impurities.

Therefore, it has been one of the urgent problems to be solved in the field to provide a green and safe method for preparing a hexafluorophosphate salt and phosphorus pentafluoride.

### SUMMARY

The following is a summary of the subject detailed herein. This summary is not intended to limit the scope of the claims.

An embodiment of the present application provides a hexafluorophosphate salt, phosphorus pentafluoride, a preparation method thereof and use thereof. The preparation process of the hexafluorophosphate salt does not require phosphorus pentafluoride as the raw material and thus avoids using hydrogen fluoride as the raw material for phosphorus pentafluoride production, so that the safety risk of production is reduced, the raw material source is wide, and the raw material cost is reduced, facilitating the industrial large-scale production.

In a first aspect, an embodiment of the present application provides a preparation method of a hexafluorophosphate salt, including the following steps:
(1) mixing a phosphoric acid solution of phosphorus pentoxide, sulfur trioxide and fluoride under an inert gas atmosphere, and performing reaction to obtain a hexafluorophosphate salt precursor; and
(2) subjecting the hexafluorophosphate salt precursor obtained in step (1) to evaporation and concentration, dissolution, filtration and drying in sequence to obtain the hexafluorophosphate salt.

In the preparation method of a hexafluorophosphate salt provided by the present application, phosphorus pentoxide and sulfur trioxide are used as raw materials, which have wide source and low cost, facilitating the industrial large-scale production. In addition, the preparation method avoids using phosphorus pentafluoride and hydrogen fluoride as raw materials and reduces the safety risk of production.

In the present application, the mixing a phosphoric acid solution of phosphorus pentoxide, sulfur trioxide and fluoride is mixing in a reaction kettle where the moisture content is lower than 10 ppm, and the mixing includes: firstly adding phosphoric acid at room temperature, then slowly adding phosphorus pentoxide into the phosphoric acid, stirring the phosphorus pentoxide until dissolved and then adding liquid sulfur trioxide dropwise with the system temperature controlled, slowly adding fluoride after the dropwise addition, mixing and stirring the system uniformly and then sealing the reaction kettle.

Preferably, the phosphoric acid solution of phosphorus pentoxide in step (1) is a mixed solution of phosphorus pentoxide and phosphoric acid.

Preferably, the phosphorus pentoxide and the phosphoric acid have a molar ratio of 1: (0.01-1.0), such as 1:0.01, 1:0.1, 1:0.2, 1:0.3, 1:0.4, 1:0.5, 1:0.6, 1:0.7, 1:0.8, 1:0.9 or 1:1.0; however, the molar ratio is not limited to the listed values, and other unlisted values within the numerical range are also applicable; further preferably, the molar ratio is 1: (0.1-1.0).

Preferably, the phosphorus pentoxide, the sulfur trioxide in step (1) and fluorine ions in the fluoride have a molar ratio of 1: (5.0-10.0): (12.0-24.0), such as 1:5.0: 12.0, 1:10.0:24.0, 1:8.0:18.0, 1:7.5:19.5 or 1:6.0:20.0; however, the molar ratio is not limited to the listed values, and other unlisted values within the numerical range are also applicable.

Preferably, the fluoride in step (1) includes any one or a combination of at least two of fluoride containing alkali metal ions, fluoride containing alkaline earth metal ions, fluoride containing transition metal or fluoride containing ammonium ions, and a typical but non-limiting combination includes a combination of fluoride containing alkali metal ions and fluoride containing alkaline earth metal ions, a combination of fluoride containing transition metal and fluoride containing ammonium ions, or a combination of fluoride containing alkali metal ions, fluoride containing alkaline earth metal ions and fluoride containing transition metal.

Preferably, the fluoride in step (1) includes any one or a combination of at least two of potassium fluoride, lithium fluoride, sodium fluoride, rubidium fluoride, cesium fluoride, magnesium fluoride, calcium fluoride or barium fluoride, and a typical but non-limiting combination includes a combination of potassium fluoride and lithium fluoride, a combination of potassium fluoride and sodium fluoride, a combination of lithium fluoride and calcium fluoride, a combination of lithium fluoride and magnesium fluoride, or a combination of potassium fluoride and magnesium fluoride.

As a preferred technical solution of the present application, the fluoride in step (1) of the present application includes any one or a combination of at least two of potassium fluoride, lithium fluoride, sodium fluoride or magnesium fluoride, and a typical but non-limiting combination includes a combination of potassium fluoride and lithium fluoride, a combination of potassium fluoride and sodium fluoride, a combination of potassium fluoride and magnesium fluoride, a combination of lithium fluoride, sodium fluoride and magnesium fluoride, or a combination of potassium fluoride, lithium fluoride, sodium fluoride and magnesium fluoride.

Preferably, the reaction in step (1) is performed at 60.0-150.0°C, such as 60.0°C, 80.0°C, 100.0°C, 120.0°C, 140.0°C or 150.0°C; however, the temperature is not limited to the listed values, and other unlisted values within the numerical range are also applicable; further preferably, the temperature is 60.0-120.0°C.

Preferably, the reaction in step (1) is performed for 10.0-15.0 h, such as 10.0 h, 11.0 h, 12.0 h, 13.0 h, 14.0 h or 15.0 h; however, the time is not limited to the listed values, and other unlisted values within the numerical range are also applicable.

The inert gas in step (1) of the present application includes any one or a combination of at least two of nitrogen, argon, helium or neon.

The concentration and evaporation in step (2) of the present application may be performed sufficiently at normal pressure or may be performed at reduced pressure, and for example, the concentration and evaporation is performed sufficiently at 0.01-0.05 MPa. The temperature of the concentration and evaporation is not particularly limited, as long as the desired concentration effect can be achieved without causing decomposition of the target product to generate unnecessary impurities, which may be, for example, 80.0-100.0°C. The phosphoric acid solvent and redundant sulfur trioxide can be evaporated and removed by evaporation and concentration.

Preferably, a solvent used in the dissolution in step (2) includes ethanol or acetone.

The dissolution process in step (2) of the present application can remove insoluble sulfate and fluoride salts via adding ethanol or acetone for sufficiently dissolution and then filtering. The hexafluorophosphate salt can be dissolved in ethanol or acetone and substantially dissolved in the filtrate. In order to further improve the purity, the process of dissolution and filtration may be performed for two or more times.

The temperature and the time of the drying in step (2) of the present application are not particularly limited as long as the desired drying effect can be obtained without causing decomposition of the target product to generate unnecessary impurities, and for example, the drying may be sufficiently performed at 80.0-100.0°C.

As a preferred technical solution of the preparation method according to the first aspect of the present application, the preparation method includes the following steps:
(1) mixing a phosphoric acid solution of phosphorus pentoxide, sulfur trioxide and fluoride under an inert gas atmosphere, and performing reaction at 60.0-150.0°C for 10.0-15.0 h to obtain a hexafluorophosphate salt precursor; the phosphoric acid solution of phosphorus pentoxide is a mixed solution of phosphorus pentoxide and phosphoric acid; the phosphorus pentoxide and the phosphoric acid have a molar ratio of 1: (0.01-1.0); the phosphorus pentoxide, the sulfur trioxide in step (1) and fluorine ions in the fluoride have a molar ratio of 1: (5.0-10.0): (12.0-24.0); and
(2) subjecting the hexafluorophosphate salt precursor obtained in step (1) to evaporation and concentration at 80.0-100.0°C, dissolution with ethanol or acetone, and then filtration to obtain a filtrate, and drying the filtrate at 80.0-100.0°C to obtain the hexafluorophosphate salt.

In a second aspect, an embodiment of the present application provides a hexafluorophosphate salt, which is obtained by the preparation method according to the first aspect.

The hexafluorophosphate salt of the present application is a white powder.

In a third aspect, an embodiment of the present application provides use of the hexafluorophosphate salt prepared by the preparation method according to the first aspect, wherein the hexafluorophosphate salt is used as an electrolyte additive for lithium-ion batteries

In a fourth aspect, an embodiment of the present application provides a preparation method of phosphorus pentafluoride, including the following steps:
(a) mixing a hexafluorophosphate salt and a catalyst solution, and performing catalytic reaction to obtain a crude phosphorus pentafluoride gas; and
(b) subjecting the crude phosphorus pentafluoride gas obtained in step (a) to condensation, pressurizing liquefaction and adsorption impurity removal in sequence to obtain the phosphorus pentafluoride;
the hexafluorophosphate salt in step (1) is the hexafluorophosphate salt according to claim 6.

In the present application, high-boiling point impurities are removed by condensation to obtain high-purity phosphorus pentafluoride. The high-boiling point impurities include any one or a combination of at least two of sulfur trioxide, sulfur dioxide, phosphorus trioxyfluoride, hydrogen fluoride or phosphoric acid vapor. They have a higher boiling point relative to phosphorus pentafluoride, belonging to high-boiling point impurities.

Preferably, the catalyst in step (a) includes any one or a combination of at least two of sulfuric acid, sulfur trioxide, a sulfuric acid solution of sulfur trioxide, a sulfuric acid solution of phosphorus pentoxide, a phosphoric acid solution of sulfur trioxide, or crown ether, and a typical but non-limiting combination includes a combination of sulfuric acid and sulfur trioxide, a combination of sulfur trioxide, a sulfuric acid solution of sulfur trioxide, a sulfuric acid solution of phosphorus pentoxide and a phosphoric acid solution of sulfur trioxide, or a combination of sulfuric acid and crown ether.

Further preferably, the catalyst in step (a) includes any one or a combination of at least two of sulfuric acid, sulfur trioxide or a sulfuric acid solution of sulfur trioxide, and a typical but non-limiting combination includes a combination of sulfuric acid and sulfur trioxide, a combination of sulfuric acid and a sulfuric acid solution of sulfur trioxide, a combination of sulfur trioxide and a sulfuric acid solution of sulfur trioxide, or a combination of sulfuric acid, sulfur trioxide and a sulfuric acid solution of sulfur trioxide.

Preferably, the crown ether includes any one or a combination of at least two of 12-crown-4, 15-crown-5 or 18-crown-6, and a typical but non-limiting combination includes a combination of 12-crown-4 and 15-crown-5, a combination of 15-crown-5 and 18-crown-6, a combination of 12-crown-4 and 18-crown-6, or a combination of 12-crown-4, 15-crown-5 and 18-crown-6.

Preferably, the catalytic reaction in step (a) is performed at 150-400°C, such as 150°C, 200°C, 250°C, 300°C, 350°C or 400°C; however, the temperature is not limited to the listed values, and other unlisted values within the numerical range are also applicable.

The hexafluorophosphate salt and the catalyst solution in step (a) have a molar ratio of 1: (5.0-20.0), such as 1:5.0, 1:8.0, 1:10.0, 1:12.0, 1:14.0, 1:16.0, 1:18.0 or 1:20.0; however, the molar ratio is not limited to the listed values, and other unlisted values within the numerical range are also applicable; further preferably, the molar ratio is 1: (10.0-15.0).

It should be noted that the molar ratio of the hexafluorophosphate salt to the catalyst solution in the present application is not particularly limited as long as a relevant catalytic effect can be obtained.

Preferably, the time of the catalytic reaction in step (a) is 8-12 h, such as 8 h, 9 h, 10 h, 11 h or 12 h; however, the time is not limited to the listed values, and other unlisted values within the numerical range are also applicable.

Preferably, the condensation in step (b) is performed at 0.1-0.2 MPa, such as 0.1 MPa, 0.12 MPa, 0.14 MPa, 0.16 MPa, 0.18 MPa or 0.2 MPa; however, the pressure is not limited to the listed values, and other unlisted values within the numerical range are also applicable.

Preferably, the condensation in step (b) is performed at -50°C to -40°C, such as -50°C, -48°C, -46°C, -44°C, -42°C or -40°C; however, the temperature is not limited to the listed values, and other unlisted values within the numerical range are also applicable.

Preferably, the pressurizing liquefaction in step (b) is performed at 0.6-1.0 MPa, such as 0.6 MPa, 0.7 MPa, 0.8 MPa, 0.9 MPa or 1.0 MPa; however, the pressure is not limited to the listed values, and other unlisted values within the numerical range are also applicable; further preferably, the pressure is 0.6-0.8 MPa.

Preferably, an adsorbent used in the adsorption impurity removal in step (b) includes any one or a combination of at least two of fluoride containing alkali metal ions, fluoride containing alkaline earth metal ions or fluoride containing ammonium ions, and a typical but non-limiting combination includes a combination of fluoride containing alkali metal ions and fluoride containing alkaline earth metal ions, a combination of fluoride containing transition metal and fluoride containing ammonium ions, or a combination of fluoride containing alkali metal ions, fluoride containing alkaline earth metal ions and fluoride containing transition metal.

Preferably, the adsorbent includes any one or a combination of at least two of potassium fluoride, lithium fluoride, sodium fluoride, rubidium fluoride, cesium fluoride, magnesium fluoride, calcium fluoride or barium fluoride, and further preferably, the adsorbent includes any one or a combination of at least two of potassium fluoride, lithium fluoride or magnesium fluoride.

The adsorbent of the present application can remove impurities by adsorption, and for example, a small amount of residual hydrogen fluoride or the like can be removed.

In a fifth aspect, an embodiment of the present application provides phosphorus pentafluoride, which is obtained by the preparation method according to the third aspect.

Preferably, the phosphorus pentafluoride has a purity of more than or equal to 99.9%, such as 99.9%, 99.91%, 99.92%, 99.93%, 99.94%, 99.96% or 99.98%; however, the purity is not limited to the listed values, and other unlisted values within the numerical range are also applicable.

The purity of the phosphorus pentafluoride provided by the present application is more than or equal to 99.9%, wherein the content of anhydrous hydrogen fluoride is less than or equal to 10 ppm, the moisture content is less than or equal to 10 ppm and the metal ion content is less than or equal to 5 ppm.

In a sixth aspect, an embodiment of the present application provides use of the phosphorus pentafluoride prepared by the preparation method according to the forth aspect, wherein the phosphorus pentafluoride is used in preparing a phosphate electrolyte additive such as lithium hexafluorophosphate or lithium difluorophosphate for lithium-ion batteries

As a preferred technical solution of the present application, the preparation method of phosphorus pentafluoride includes the following steps:
(1) mixing a phosphoric acid solution of phosphorus pentoxide, sulfur trioxide and fluoride under an inert gas atmosphere, and performing reaction at 60.0-150.0°C for 10.0-15.0 h to obtain a hexafluorophosphate salt precursor; the phosphoric acid solution of phosphorus pentoxide is a mixed solution of phosphorus pentoxide and phosphoric acid; the phosphorus pentoxide and the phosphoric acid have a molar ratio of 1: (0.01-1.0); the phosphorus pentoxide, the sulfur trioxide in step (1) and fluorine ions in the fluoride have a molar ratio of 1: (5.0-10.0): (12.0-24.0); and
(2) subjecting the hexafluorophosphate salt precursor obtained in step (1) to evaporation and concentration at 80.0-100.0°C, dissolution with ethanol or acetone, and then filtration to obtain a filtrate, and drying the filtrate at 80.0-100.0°C to obtain the hexafluorophosphate salt;
(3) mixing the hexafluorophosphate salt and a catalyst solution, and performing catalytic reaction to obtain a crude phosphorus pentafluoride gas; the hexafluorophosphate salt and the catalyst solution have a molar ratio of 1: (5.0-20.0); and
(4) subjecting the crude phosphorus pentafluoride gas obtained in step (3) to condensation at 0.1-0.2 MPa and -50°C to -40°C, pressurizing liquefaction at 0.6-1.0 MPa and adsorption impurity removal with an adsorbent in sequence to obtain the phosphorus pentafluoride;

The numerical ranges of the present application include not only the listed point values, but also any unlisted point value within the numerical ranges, and the present application will not list the specific point values exhaustively for space and brevity.

Compared with the related art, the embodiments of the present application have the following beneficial effects:
(1) the preparation method of a hexafluorophosphate salt provided by embodiments of the present application does not use phosphorus pentafluoride as the raw material and thus avoids using hydrogen fluoride as the raw material for phosphorus pentafluoride production, so that the safety risk of production is reduced;
(2) in the preparation method of a hexafluorophosphate salt provided by embodiments of the present application, phosphorus pentoxide and sulfur trioxide are used as raw materials, which have low cost and wide source, thereby reducing the production cost and facilitating the industrial large-scale production; and
(3) the preparation method of a hexafluorophosphate salt and the preparation method of phosphorus pentafluoride provided by embodiments of the present application have mild reaction, high conversion rate, low impurity generation amount and controllable process.

Other aspect will become apparent upon reading and understand the detailed description.

### DETAILED DESCRIPTION

The technical solutions of the present application are further described below through embodiments. It should be apparent to those skilled in the art that the embodiments are merely used for a better understanding of the present application and should not be regarded as a specific limitation on the present application.

Part of chemicals in the examples and comparative examples are obtained from the following sources: phosphorus pentoxide and potassium chloride are purchased from Shanghai Macklin Biochemical Co., Ltd.;
sulfur trioxide is purchased from Quzhou Hemao Chemical Co., Ltd.;
hexafluorophosphate salts are purchased from Shanghai Macklin;
phosphoric acid, sulfuric acid and other solvents are purchased from Aladdin Reagent website.

The raw materials or reagents used in the examples and comparative examples of the present application are all purchased from mainstream manufacturers in the market. Those without specifying the manufacturer or the concentration are the analytical pure-grade raw materials or reagents that are common in the market, which are not particularly limited as long as the expected effects can be achieved. Instruments and devices such as the reaction kettle and rotary evaporator used in the examples are purchased from major manufacturers in the market, which are not particularly limited as long as the expected effects can be achieved. Those without specific technique or conditions specified in the examples are performed according to the technique or conditions described in the publications in the art or according to the product specifications.

### Example 1

This example provides a hexafluorophosphate salt and phosphorus pentafluoride, and a preparation method of the hexafluorophosphate salt and the phosphorus pentafluoride includes the following steps:
(1) 1.1 mol of phosphoric acid solution of phosphorus pentoxide, 0.5 mol of sulfur trioxide and 1.2 mol of potassium fluoride were mixed in a nitrogen atmosphere, and reacted at 120.0°C for 10.0 h to obtain a potassium hexafluorophosphate precursor; the phosphoric acid solution of phosphorus pentoxide was a mixed solution of phosphorus pentoxide and phosphoric acid; the phosphorus pentoxide and the phosphoric acid had a molar ratio of 0.1: 1.0;
(2) the potassium hexafluorophosphate precursor obtained in step (1) was subjected to evaporation and concentration at 100.0°C, and removal of phosphoric acid solvent and the like, to precipitate a solid powder mixture, and the solid powder mixture was dissolved with 5.0 mol of ethanol and then filtered to obtain a filtrate, removing insoluble solid powders such as the generated potassium sulfate and the potassium fluoride that might be residual, and the filtrate was dried at 100.0°C to obtain 0.181 mol of the potassium hexafluorophosphate;
(3) 0.1 mol of the potassium hexafluorophosphate obtained in step (2) and 1.0 mol of sulfuric acid were mixed, and subjected to catalytic reaction at 150.0°C for 12 h to obtain a crude phosphorus pentafluoride gas; and
(4) the crude phosphorus pentafluoride gas obtained in step (3) was subjected to condensation at 0.1 MPa and -50°C, condensing the impurity gas which had a high boiling point into liquid for removal, the gas after the condensing impurity removal was subjected to pressurizing liquefaction at 0.6 MPa, and then adsorption impurity removal with potassium fluoride, removing a small amount of contained hydrogen fluoride, to obtain a high-purity phosphorus pentafluoride.

By using the preparation method in this example, 0.181 mol of potassium hexafluorophosphate is prepared. A yield of the potassium hexafluorophosphate is 90.5% and a purity of the potassium hexafluorophosphate is 99.90%.

The phosphorus pentafluoride prepared by the preparation method in the example has a purity of 99.96%.

### Example 2

This example provides a hexafluorophosphate salt and phosphorus pentafluoride, and a preparation method of the hexafluorophosphate salt and the phosphorus pentafluoride includes the following steps:
(1) 0.2 mol of phosphoric acid solution of phosphorus pentoxide, 1.0 mol of sulfur trioxide and 2.4 mol of lithium fluoride were mixed in an argon atmosphere, and reacted at 60.0°C for 15.0 h to obtain a lithium hexafluorophosphate precursor; the phosphoric acid solution of phosphorus pentoxide was a mixed solution of phosphorus pentoxide and phosphoric acid; the phosphorus pentoxide and the phosphoric acid had a molar ratio of 1.0: 1.0;
(2) the lithium hexafluorophosphate precursor obtained in step (1) was subjected to evaporation and concentration at 80°C, and removal of phosphoric acid solvent and residual sulfur trioxide and the like, to precipitate a solid powder mixture, and the solid powder mixture was dissolved with 8.0 mol of acetone and then filtered to obtain a filtrate, removing insoluble solid powders such as the generated lithium sulfate and the residual lithium fluoride, and the filtrate was dried at 80.0°C to obtain 0.186 mol of the lithium hexafluorophosphate;
(3) 0.1 mol of the lithium hexafluorophosphate obtained in step (2) and 1.0 mol of sulfuric acid solution of sulfur trioxide were mixed, and subjected to catalytic reaction at 400°C for 8 h to obtain a crude phosphorus pentafluoride gas; the sulfuric acid solution of sulfur trioxide had a molar concentration of 20mol%; and
(4) the crude phosphorus pentafluoride gas obtained in step (3) was subjected to condensation at 0.2 MPa and -40°C, pressurizing liquefaction at 1.0 MPa, and then adsorption impurity removal with lithium fluoride, to obtain a high-purity phosphorus pentafluoride.

By using the preparation method in this example, 0.186 mol of lithium hexafluorophosphate is prepared. A yield of the lithium hexafluorophosphate is 93.0% and a purity of the potassium hexafluorophosphate is 99.92%.

The phosphorus pentafluoride prepared by the preparation method in the example has a purity of 99.98%.

### Example 3

This example provides a hexafluorophosphate salt and phosphorus pentafluoride, and a preparation method of the hexafluorophosphate salt and the phosphorus pentafluoride includes the following steps:
(1) 1.1 mol of phosphoric acid solution of phosphorus pentoxide, 0.75 mol of sulfur trioxide and 1.8 mol of magnesium fluoride were mixed in a nitrogen atmosphere, and reacted at 90.0°C for 12.0 h to obtain a magnesium hexafluorophosphate precursor; the phosphoric acid solution of phosphorus pentoxide was a mixed solution of phosphorus pentoxide and phosphoric acid; the phosphorus pentoxide and the phosphoric acid had a molar ratio of 0.1: 1.0;
(2) the magnesium hexafluorophosphate precursor obtained in step (1) was subjected to evaporation and concentration at 90.0°C, and removal of phosphoric acid solvent and sulfur trioxide and the like, to precipitate a solid powder mixture, and the solid powder mixture was dissolved with 8.0 mol of acetone and then filtered to obtain a filtrate, removing insoluble solid powders such as magnesium sulfate and magnesium fluoride, and the filtrate was dried at 90.0°C to obtain 0.091 mol of the magnesium hexafluorophosphate;
(3) 0.05 mol of the magnesium hexafluorophosphate and 1.0 mol of sulfuric acid solution of sulfur trioxide were mixed, and subjected to catalytic reaction at 300°C for 10.0 h to obtain a crude phosphorus pentafluoride gas; the sulfuric acid solution of sulfur trioxide had a molar concentration of 20mol%; and
(4) the crude phosphorus pentafluoride gas obtained in step (3) was subjected to condensation at 0.15 MPa and -45°C, pressurizing liquefaction at 0.8 MPa, and then adsorption impurity removal with an adsorbent, to obtain a high-purity phosphorus pentafluoride.

By using the preparation method in this example, 0.091 mol of magnesium hexafluorophosphate is prepared. A yield of the magnesium hexafluorophosphate is 91.0% and a purity of the magnesium hexafluorophosphate is 99.91%.

The phosphorus pentafluoride prepared by the preparation method in the example has a purity of 99.98%.

### Example 4

This example provides a hexafluorophosphate salt and phosphorus pentafluoride, and a preparation method of the hexafluorophosphate salt and the phosphorus pentafluoride is the same as Example 1, except that the potassium fluoride in step (1) was replaced with sodium fluoride.

### Example 5

This example provides a hexafluorophosphate salt and phosphorus pentafluoride, and a preparation method of the hexafluorophosphate salt and the phosphorus pentafluoride is the same as Example 1, except that the catalyst solution in step (3) was replaced with a mixed solution of 1.0 mol of sulfuric acid solution of sulfur trioxide having a molar concentration of 20mol% and 0.5 mol of 12-crown-4.

### Comparative Example 1

This comparative example provides a hexafluorophosphate salt and phosphorus pentafluoride, and a preparation method of the hexafluorophosphate salt and the phosphorus pentafluoride is the same as Example 1, except that the molar amount of sulfur trioxide in step (1) was changed to 2.0 mol.

### Comparative Example 2

This comparative example provides a hexafluorophosphate salt and phosphorus pentafluoride, and a preparation method of the hexafluorophosphate salt and the phosphorus pentafluoride is the same as Example 1, except that the reaction temperature in step (1) was changed to 30.0°C.

### Comparative Example 3

This comparative example provides a hexafluorophosphate salt and phosphorus pentafluoride, and a preparation method of the hexafluorophosphate salt and the phosphorus pentafluoride is the same as Example 1, except that the reaction temperature in step (1) was changed to 160°C. The hexafluorophosphate salts provided in Examples 1-5 and Comparative Examples 1-3 were subjected to product performance testing. The purity was detected by Metrohm 930 ion chromatograph; the free acid (HF) content was detected by Metrohm 888 potentiometric titrator; the moisture content of the product was detected in accordance with Karl Fischer method by Metrohm cassette stove (885)-moisture meter (917) combination; the impurity metal ion content of the product was detected by inductively coupled plasma optical emission spectroscopy (ICP-OES). The test results obtained are shown in Table 1.

**Table 1**

| | Product | Yield/ % | Purity/ % | HF content /ppm | Chloride ion content /ppm | Moisture content /ppm | Impurity metal ion content /ppm |
|---|---|---|---|---|---|---|---|
| Example 1 | potassium hexafluorophosphate | 90.5 | 99.90 | 12 | 3 | 8 | 32 |
| Example 2 | lithium hexafluorophosphate | 93.0 | 99.92 | 10 | 2 | 7 | 25 |
| Example 3 | magnesium hexafluorophosphate | 91.0 | 99.91 | 12 | 3 | 9 | 29 |
| Example 4 | sodium hexafluorophosphate | 90.2 | 99.91 | 11 | 4 | 7 | 28 |
| Example 5 | potassium hexafluorophosphate | 90.4 | 99.89 | 12 | 4 | 7 | 33 |
| Comparative Example 1 | potassium hexafluorophosphate | 90.6 | 99.62 | 17 | 5 | 14 | 31 |
| Comparative Example 2 | potassium hexafluorophosphate | 85.4 | 97.53 | 13 | 6 | 12 | 33 |
| Comparative Example 3 | potassium hexafluorophosphate | 90.1 | 98.67 | 19 | 5 | 13 | 43 |

The phosphorus pentafluoride provided in Examples 1-5 and Comparative Examples 1-3 were subjected to product performance testing. The purity of phosphorus pentafluoride was detected by fourier transform infrared spectroscopy; the free acid (HF) content was detected by Metrohm 888 potentiometric titrator; the moisture content of the product was detected in accordance with Karl Fischer method by Metrohm cassette stove (885)-moisture meter (917) combination; the impurity metal ion content of the product was detected by inductively coupled plasma optical emission spectroscopy (ICP-OES). The test results obtained are shown in Table 2.

**Table 2**

| | Purity/% | HF content /ppm | Moisture content/ppm | Impurity metal ion content/ppm |
|---|---|---|---|---|
| Example 1 | 99.96 | 10 | 8 | 4 |
| Example 2 | 99.98 | 9 | 4 | 2 |
| Example 3 | 99.98 | 8 | 6 | 5 |
| Example 4 | 99.95 | 9 | 7 | 5 |
| Example 5 | 99.97 | 7 | 5 | 4 |
| Comparative Example 1 | 99.90 | 10 | 9 | 5 |
| Comparative Example 2 | 99.83 | 12 | 11 | 4 |
| Comparative Example 3 | 99.86 | 17 | 13 | 7 |

As can be seen from Table 1 and Table 2, the yield of the hexafluorophosphate salt in Examples 1-5 of the present application is more than 90%, the purity is remarkably superior to that of the comparative examples, the free acid content is less than or equal to 12 ppm, the moisture content is less than or equal to 10 ppm, and the impurity metal content is less than or equal to 33 ppm; the purity of the phosphorus pentafluoride in Examples 1-5 of the present application is high, which is more than or equal to 99.95% and superior to that of the comparative examples, the free acid content is less than or equal to 10 ppm, the moisture content is less than or equal to 10 ppm, and the impurity content is less than or equal to 5 ppm.

Comparing Examples 1-5 with Comparative Example 1, the excess of sulfur trioxide in step (1) in Comparative Example 1, which is out of the preferred range of the present application, results in reduced purity of the hexafluorophosphate salt, increased free acid content, and increased moisture content; the purity of phosphorus pentafluoride is also reduced.

Comparing Examples 1-5 with Comparative Example 2, the reaction temperature in step (1) of Comparative Example 2 is too low, which is lower than the preferred range of the present application, resulting in incomplete reaction, more unreacted materials remaining, significantly reduced yield and purity of hexafluorophosphate salt, increased free acid content, and increased moisture content; the purity of phosphorus pentafluoride is obviously reduced, and the free acid content and the moisture content are increased.

As can be seen from Table 1 and Table 2, comparing Examples 1-5 with Comparative Example 3, the reaction temperature in step (1) of Comparative Example 2 is too high, which is higher than the preferred range of the present application, resulting in excessive reaction and by-product generation, significantly reduced purity of hexafluorophosphate salt, significantly increased free acid content, and increased impurity metal ion content; the purity of the phosphorus pentafluoride is obviously reduced, the free acid content is obviously increased, and the moisture content and the impurity metal ion content are also increased.

In summary, good yield and purity are unexpectedly obtained in the present application by applying a novel technical solution, including using phosphorus pentoxide, sulfur trioxide and fluoride as raw materials and precisely controlling the molar ratio of the reaction and the reaction conditions. In the present application, the preparation of the hexafluorophosphate salt does not employ phosphorus pentafluoride as the raw material and thus avoids using hydrogen fluoride as the raw material for phosphorus pentafluoride production, so that the safety risk of production is greatly reduced, a new production process is provided, the raw material source is wide, the raw material cost is reduced, the yield and the purity are high, and the impurity content is low, facilitating the industrial large-scale production.

The objects, technical solutions and advantages of the present application are further described in detail by the embodiments. It is to be understood that the above description is only the embodiments of the present application and is not intended to limit the present application. Any modifications, equivalents, and improvements made within the spirit and principles of the present application are all fall within the scope of the present application.

## Claims

1. A preparation method of a hexafluorophosphate salt, comprising the following steps:
(1) mixing a phosphoric acid solution of phosphorus pentoxide, sulfur trioxide and fluoride under an inert gas atmosphere, and performing reaction to obtain a hexafluorophosphate salt precursor; and
(2) subjecting the hexafluorophosphate salt precursor obtained in step (1) to evaporation and concentration, dissolution, filtration, and drying in sequence to obtain the hexafluorophosphate salt.

2. The preparation method according to claim 1, wherein the phosphoric acid solution of phosphorus pentoxide in step (1) is a mixed solution of phosphorus pentoxide and phosphoric acid;
the phosphorus pentoxide and the phosphoric acid have a molar ratio of 1: (0.01-1.0).

3. The preparation method according to claim 2, wherein the phosphorus pentoxide, the sulfur trioxide in step (1) and fluorine ions in the fluoride have a molar ratio of 1: (5.0-10.0): (12.0-24.0);
the fluoride in step (1) comprises any one or a combination of at least two of fluoride containing alkali metal ions, fluoride containing alkaline earth metal ions, fluoride containing transition metal or fluoride containing ammonium ions;
the fluoride in step (1) comprises any one or a combination of at least two of potassium fluoride, lithium fluoride, sodium fluoride, rubidium fluoride, cesium fluoride, magnesium fluoride, calcium fluoride or barium fluoride;
the reaction in step (1) is performed at 60.0-150.0°C;
a solvent used in the dissolution in step (2) comprises ethanol or acetone.

4. The preparation method according to claim 1, wherein the preparation method comprises the following steps:
(1) mixing a phosphoric acid solution of phosphorus pentoxide, sulfur trioxide and fluoride under an inert gas atmosphere, and performing reaction at 60.0-150.0°C for 10.0-15.0 h to obtain a hexafluorophosphate salt precursor; the phosphoric acid solution of phosphorus pentoxide is a mixed solution of phosphorus pentoxide and phosphoric acid; the phosphorus pentoxide and the phosphoric acid have a molar ratio of 1: (0.01-1.0); the phosphorus pentoxide, the sulfur trioxide in step (1) and fluorine ions in the fluoride have a molar ratio of 1: (5.0-10.0): (12.0-24.0); and
(2) subjecting the hexafluorophosphate salt precursor obtained in step (1) to evaporation and concentration at 80.0-100.0°C, dissolution with ethanol or acetone, and then filtration to obtain a filtrate, and drying the filtrate at 80.0-100.0°C to obtain the hexafluorophosphate salt.

5. A hexafluorophosphate salt, which is obtained by the preparation method according to any one of claims 1 to 4.

6. Use of the hexafluorophosphate salt according to claim 5, wherein the hexafluorophosphate salt is used as an electrolyte additive for lithium-ion batteries.

7. A preparation method of phosphorus pentafluoride, comprising the following steps:
(a) mixing a hexafluorophosphate salt and a catalyst solution, and performing catalytic reaction to obtain a crude phosphorus pentafluoride gas; and
(b) subjecting the crude phosphorus pentafluoride gas obtained in step (a) to condensation, pressurizing liquefaction and adsorption impurity removal in sequence to obtain the phosphorus pentafluoride;
the hexafluorophosphate salt in step (1) is the hexafluorophosphate salt according to claim 6.

8. The preparation method according to claim 7, wherein the catalyst in step (a) comprises any one or a combination of at least two of sulfuric acid, sulfur trioxide, a sulfuric acid solution of sulfur trioxide, a sulfuric acid solution of phosphorus pentoxide, a phosphoric acid solution of sulfur trioxide, or crown ether;
the crown ether comprises any one or a combination of at least two of 12-crown-4, 15-crown-5 or 18-crown-6;
the catalytic reaction in step (a) is performed at 150-400°C;
the hexafluorophosphate salt and the catalyst solution in step (a) have a molar ratio of 1: (5.0-20.0);
the condensation in step (b) is performed at 0.1-0.2 MPa;
the condensation in step (b) is performed at -50°C to -40°C;
the pressurizing liquefaction in step (b) is performed at 0.6-1.0 MPa;
an adsorbent used in the adsorption impurity removal in step (b) comprises any one or a combination of at least two of fluoride containing alkali metal ions, fluoride containing alkaline earth metal ions or fluoride containing ammonium ions.

9. Phosphorus pentafluoride, which is obtained by the preparation method according to claim 7 or 8;
the phosphorus pentafluoride has a purity of more than or equal to 99.9%.

10. Use of the phosphorus pentafluoride according to claim 9, wherein the phosphorus pentafluoride is used in preparing lithium hexafluorophosphate or lithium difluorophosphate for lithium-ion batteries.
